(19) Europäisches Patentamt
European Patent Office
Office européen des brevets

(11) **EP 4 389 334 A1**

(12) **EUROPEAN PATENT APPLICATION**

(43) Date of publication:
**26.06.2024 Bulletin 2024/26**

(21) Application number: **22216272.9**

(22) Date of filing: **23.12.2022**

(51) International Patent Classification (IPC):
**B23H 7/02** *(2006.01)*     **B23H 7/20** *(2006.01)*

(52) Cooperative Patent Classification (CPC):
**B23H 7/02; B23H 7/20**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Agie Charmilles SA
6616 Losone (CH)**

(72) Inventors:
• **Wiessner, Moritz
6600 Locarno (CH)**
• **Boccadoro, Marco
6653 Verscio (CH)**

(74) Representative: **Li Schrag, Yue
Georg Fischer AG
Amsler-Laffon-Strasse 9
8201 Schaffhausen (CH)**

(54) **METHOD AND DEVICE FOR WIRE ELECTRICAL DISCHARGE MACHINING**

(57)     The invention provides a method for determining a condition of a wire electrode deployed in a wire electrical discharge machine, the wire electrical discharge machine comprising a wire traveling circuit with a first- and a second wire guiding head by which the wire electrode is guided and positioned in relation to a workpiece laying between these wire guiding heads. The wire electrode is in contact with a first- and a second electrical contact, both contacts being located on the wire traveling circuit. The first- and the second electrical contact and a wire electrode segment L of said wire electrode lay after the workpiece processing section in wire traveling direction. An electrical impedance $Z_L$ of the wire electrode segment L between the first- and the second electrical contact is measured, and the condition of the wire electrode is derived from the measured electrical impedance $Z_L$ of said wire electrode segment L.

**Fig. 5**

## Description

Field of the Invention

The invention relates generally to a method for determining the condition of a wire electrode used in a wire electrical discharge machining process. Moreover, the invention relates to a method for controlling certain parameters in a wire electrical discharge machining process in consideration of the present condition of the wire electrode, in particular the wire electrode wearing condition.

Background of the Invention

The wire electrode plays a fundamental role in the wire electrical discharge machining (WEDM) process. It is subject to considerable wear due to the high energy discharges occurring between the electrodes. For this reason, during the WEDM process the wire is continuously renewed by advancing along its axis. Wire electrodes available in commerce range from diameter 0.02 to 0.40mm. Standard wires and thicker wires are typically brass based, whereas fine wires are typically tungsten or molybdenum wires. In WEDM, a wire electrode travels at a moderate speed of about 50 to 400mm/s. In WEDM machines the wire traveling speed is preset for a given pass and is constant. The wire electrode is used only once, and then immediately scrapped. It represents the highest individual cost in the operations of a WEDM machine. The wire tensioning force is also substantially constant. In a main cut, where spark pulse energy is very high, the wire wearing is considerable, so that comparably high wire traveling speed is set. In the one or more trim cut the pulse energy is progressively reduced and wire wearing reduces accordingly. However, depending on the desired surface finish, the machining time for trim cutting may be very long, so that wire consumption is relevant for both, main- and trim cutting.

The value of the wire traveling speed is typically set such as to avoid a wire breakage under any circumstances. Thus, the setting value of wire speed may be much higher than actually needed.

The wearing of the wire electrode is an issue, because it limits the machining autonomy, and because it affects the productive and non-productive costs. For this reason, it would be desirable to know the current state of the wire electrode, in particular its state of wear, possibly in a simple way and without user intervention.

Several methods for the determination of the wire diameter in a wire electrical discharge machine are known.

JPH10277843A shows an optical wire diameter measuring device which is installed on the wire running path, ahead of the WEDM machining area for measuring the size of an unused wire electrode. Such a device may also be used to measure the residual diameter of the used wire.

Optical wire diameter measuring devices are well known and used for instance in the wire drawing process. They are very fast and accurate, and even very small defects can be identified in-process, with the wire drawn at high speed. A problem with optical wire diameter measuring devices is that they are sensitive to dirt. However, in an electrical wire cutting machine it cannot be easily avoided, in particular in the machining area and in the subsequent wire disposal section. Moreover, such optical sensors add costs and complexity to the machine. Mechanical gauging means are generally excluded for the same reasons and other drawback.

JPS61209819A discloses a method for the detection of a wire diameter in a machining area and for the detection of a current feeding condition in a wire electrical discharge machine. The condition of the wire electrode and the condition of the current feeders is detected by measuring a current which flows in a loop including the wire portion between the upper and the lower current feeder. The measurement is made between an upper- and the lower current feeder; the resistance of a wire section with progressively narrowing cross-section is measured. Moreover, the distance between the upper- and the lower current feeder is comparably short, and said distance changes with the setting of Z-axis position which is a function of the workpiece thickness.

Moreover, EP3834977A1 deals with the control of the wire traveling speed. Here a wire electrode wearing model is used to determine the condition of the wire, and to adjust certain process parameters in real time. The wire traveling speed is adapted in-process as a function of the wire wearing. The advantage of this method is that the wire wearing is determined in real time. However, a discharge position detector is required to determine the position of craters on the wire. Moreover, the determination of the current wearing of the wire electrode for each machining condition and each parameter setting to complete database with wearing information requires a considerable effort.

Summary of the Invention

It is an objective of this invention to provide a measuring method to overcome the drawbacks of the known methods. It is an objective of this invention to provide a simple, reliable and universal method and device for the measurement of the wire condition, in particular the wire wearing. It is an objective of this invention to use the wire electrode up to the region of the wear limit.

The present invention discloses a method for the detection of the condition of a wire electrode, for use with a wire electrical discharge cutting process. In particular, the method is used to detect the condition of a fresh- and/or used wire electrode.

A first aspect of the present invention is directed to a method for the identification of the condition of the wire electrode by measurement of the electrical impedance of a segment of said wire electrode.

More specifically, the invention refers to a method for determining a condition of a wire electrode deployed in a wire electrical discharge machine comprising a wire traveling circuit with a first- and a second wire guiding head by which the wire electrode is guided and positioned in relation to a workpiece laying between these wire guiding heads, whereas the wire electrode is in contact with a first- and a second electrical contact, both being located on the wire traveling circuit, after the workpiece processing section in wire traveling direction, whereas a value reflecting an electrical impedance of the wire electrode segment L between the first electrical contact and the second electrical contact is measured, and the condition of the wire electrode is derived from the measured value reflecting the electrical impedance. In particular, an electrical impedance of a wire electrode segment between the first electrical contact and the second electrical contact is measured, and the condition of the wire electrode is derived from the measured electrical impedance of said wire electrode segment.

According to the present invention, the workpiece processing section defines the area, where the electrode is engaged with the workpiece and a discharge can occur.

The identification of the condition may include the identification of a wire electrode type, wire electrode diameter, the appraisal of the quality of a fresh unused wire, and the identification of a wearing status of the deployed wire electrode.

Preferably, the value reflecting the electrical impedance $Z_L$ is determined by

- applying a defined DC current signal to the considered wire electrode segment L between the first and the second electrical contact, and by measuring the voltage between the first and the second electrical contact; and/or
- applying a defined DC voltage signal to the considered wire electrode segment L between the first and the second electrical contact, and by measuring the current between the first and the second electrical contact.

A second aspect is dedicated to the control of wire traveling speed as a function of the current wearing condition of the wire electrode.

A third aspect is addressed to the control of wire taper correction as a function of the current wearing condition of the wire electrode.

A fourth aspect is addressed to the control of average machining current as a function of the current wearing condition of the wire electrode.

Further aspects are set forth in the dependent claims, the following description and the drawings. Other features are inherent in the methods and products disclosed or will become apparent to those skilled in the art from the following detailed description of embodiments and its accompanying drawings.

Brief Description of the Drawings

Embodiments of the invention are now described, by way of example, and with reference to the accompanying drawings.

FIG. 1       is a sketch of a wire traveling circuit and a machining area of a wire electrical discharge machine,

FIG. 2a,b    are sketches of a workpiece between the wire guiding heads,

FIG. 2c      is a lateral view of the wire electrode in the machining area, and two cross-sections,

FIG. 2d      is a graph illustrating the cross-section of the wire electrode as a function of the position,

FIG. 3       the sketch of FIG. 1 with additional means according the invention,

FIG. 4a,b    are exemplary configurations of a system for the determination of the wire condition,

FIG. 5       is an exemplary measuring circuit to measure the electrical impedance of a wire electrode segment,

FIG. 6       is a flowchart illustrating the adjustment of the wire traveling speed and other parameters,

FIG. 7       is a simplified illustration of the wire taper correction principle,

FIG. 8a,b    are time graphs illustrating the measuring and the machining pulses, during individual machining pulses and between a sequences of machining pulses,

FIG. 9       is a graph illustrating the exemplary relation of electrical impedance and wire traveling speed.

Detailed description and preferred embodiments

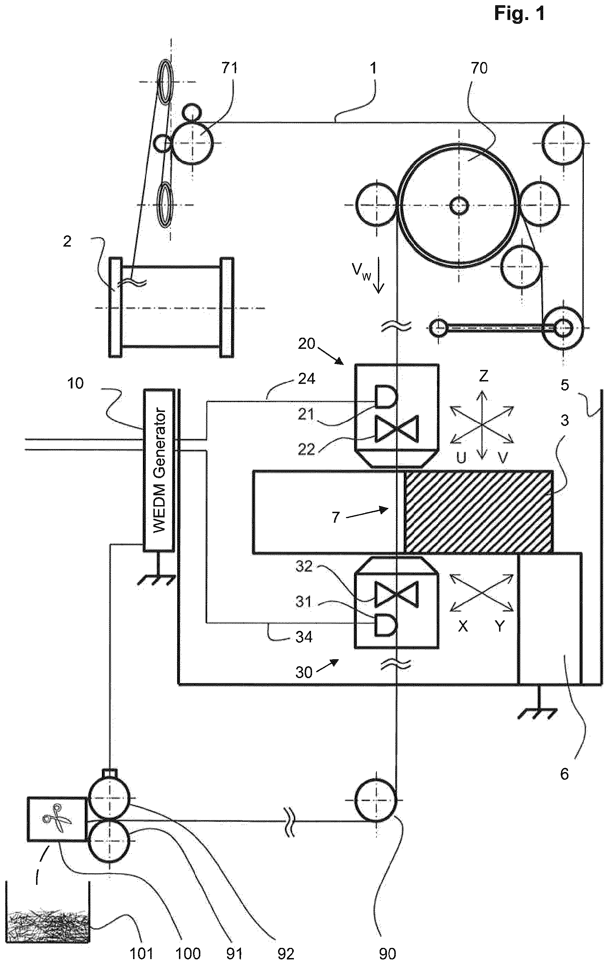

Figure 1 is a simplified illustration showing the relevant parts of a known exemplary wire electrical discharge machine (WEDM). In particular, a machining area and a wire traveling circuit are represented. The wire traveling circuit comprises a wire supplying section, a wire tensioning section, a machining area including a workpiece processing section 7, a wire evacuation section, and a wire disposal section. The wire electrode 1 is unwound and transported from a wire spool 2 to the machining area and further to a wire disposal section. The workpiece 3 is mounted on a table 6, in a work tank 5, which typically is filled with a dielectric fluid (not shown) for WEDM processing. The wire electrode 1 is drawn by a pinch roller pair 91, 92, which cooperates with a brake roller 70 to transport the wire with a desired wire traveling speed Vw and a desired wire tensioning force $F_W$. In the machining area, the wire electrode 1 is guided by a wire guide 22 located in the upper wire guiding head 20, and by a wire guide 32 located in the lower wire guiding head 30. The wire guiding heads 20, 30 each comprises a current feeding member 21, 31. Typically, the upper- and lower current feeders 21, 31 by which the machining current is fed to the traveling wire electrode 1, are sliding contacts.

In the WEDM the traveling wire electrode 1 is positioned relatively to the workpiece 3 by means of the guiding heads 20, 30, which are moved according to a machining program to generate the desired part. A lower arm (not shown) bears the lower wire guiding head 30 and a deflection roller 90, and conducts the wire electrode to the pinch rollers 91, 92. Thus, the wire electrode 1 travels from the wire supply section to a wire tensioning section, to the upper wire guiding head 20, and further to the lower wire guiding head 30 while facing the workpiece 3. The discharges occur along the engagement line of the traveling wire electrode 1 and the workpiece 3, in the workpiece processing section 7. Then, the wire electrode is transported from the lower wire guiding head 30 through the wire evacuation section to the wire disposal section. The wire disposal section typically includes a wire chopping unit 100 and a collecting box 101.

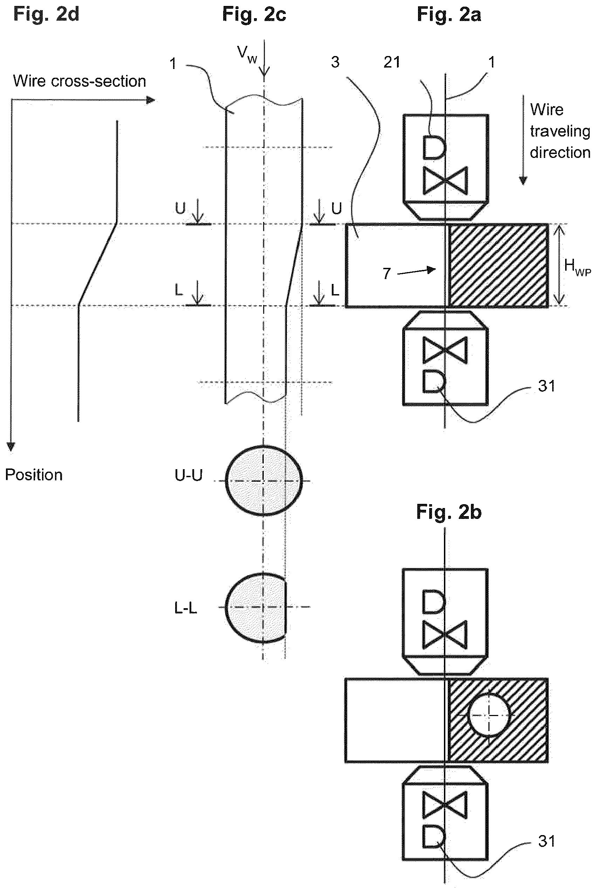

While machining by WEDM, the wire electrode 1 is subject to wear due to the energy of the discharges occurring along the engagement line of the wire and the workpiece 3. Typically, said engagement line extends from the upper surface to the lower surface of workpiece 3, as shown in figure 2a. However, the engagement line may be smaller than the general workpiece height $H_{WP}$, f.i. in case of stepped parts, openings or hollows, such as a transversal hole shown in figure 2b. The initially round cross-section U-U of the unused wire, above the workpiece, reduces progressively by the action of discharges to a cross-section L-L, below the workpiece, as stylized in figures 2c and 2d. In the evacuation section, apart from a deformation of the wire by the pinch rollers 91, 92, the cross-section of the wire remains substantially same.

According to a first embodiment of the present invention, the condition of a wire electrode deployed in a wire cutting machine - the wire cutting machine comprising a wire traveling circuit with a first- and a second wire guiding head by which the wire electrode is guided and positioned in relation to a workpiece laying between these wire guiding heads - is determined by the fact that the wire electrode is in contact with a first- and a second electrical contact, both being located along of the wire traveling circuit, after the workpiece processing section in wire traveling direction, and that a value reflecting an electrical impedance $Z_L$ of a wire electrode segment L between the first electrical contact and the second electrical contact is measured, and that the condition of the wire electrode is derived from the measured value reflecting the electrical impedance of said wire electrode segment L.

Assuming a substantially uniform wire wearing, i.e. without significant unsteadiness, the value reflecting the electrical impedance, e.g. the resistance $R_L$ of a measured wire electrode section L is proportional to the cross-section of the wire electrode 1 and to the typically constant segment length L. Thus, knowing the nominal characteristics of the deployed wire electrode and the segment length L, the measurement of the value reflecting the electrical impedance reveals the condition of a used- or unused wire electrode. Similarly, by measurement of the value reflecting the electrical impedance $Z_L$ of the currently deployed used- and unused wire electrode, and determining e.g. their difference or ratio, the wire wearing condition can be directly derived.

According to an embodiment, the electrical impedance $Z_L$ is determined by applying a DC current signal to the considered wire electrode segment L between the first- and the second electrical contact, and by measuring the voltage between the a first- and the second electrical contact, which is proportional to the electrical impedance $Z_L$ of the wire segment L.

According to an embodiment, the value reflecting the electrical impedance is determined by applying a DC current signal to the considered wire electrode segment L between the first- and the second electrical contact, and by measuring the voltage between the a first- and the second electrical contact.

Alternatively, the value reflecting the electrical impedance $Z_L$ is determined by a defined DC voltage signal to the considered wire electrode segment L between the first and the second electrical contact, and by measuring the current between the first and the second electrical contact.

It goes without saying that the contacts must be insulated with respect to each other and with respect to the machine.

In the following it is understood that, the electrical impedance can be replaced a by value reflecting the electrical impedance $Z_L$. For instance, in case of a current applied to the measuring circuit, one can use the measured voltage signal instead of the electrical impedance as the value.

Also, it is understood that, the reference value of the electrical impedance can be replaced by a reference value reflecting said electrical impedance.

Preferably, the electrical impedance is measured, after leaving the machining region between wire and workpiece, e.g. in the evacuation section, because here the cross-section of a wire used in a WEDM process is substantially constant. In the present invention, the wire evacuation section is defined as the part of the wire traveling circuit, after the workpiece processing section in the wire traveling direction. More specifically, the wire evacuation section is the part of the wire traveling circuit including the lower wire guiding head and everything below of lower wire guiding head, in wire traveling direction.

According to an embodiment of the invention, a reference value reflecting the electrical impedance of an unused wire electrode and/or electrical impedance of an exhausted wire electrode is pre-stored in a database, for one or more wire electrode types and/or wire electrode diameters.

According to the present invention, an unused wire electrode is a new wire electrode, and an exhausted wire electrode is a wire electrode which, by definition, is at its wire wearing limit. Typically, the database with the pre-stored items is provided by the machine tool manufacturer. The database, which may be local or remote, may include reference values for the electrical impedance of a plurality of wire electrodes of different diameter, type, composition and/or structure. Wire electrode database items including reference values for the electrical impedance are thus pre-stored, so that they are available to the control unit for further use.

According to another embodiment, the reference value reflecting the electrical impedance of an unused wire electrode and/or of an exhausted wire electrode is measured and stored in the database. For example, the electrical impedance of an unused wire electrode is measured while said wire is transported through the wire traveling circuit, and while no machining is performed.

Preferably, the measured value reflecting the electrical impedance is stored with additional information, such as wire diameter, wire type, composition and structure, manufacturer, production date, date of first use of the wire spool, etc.. Certain such data are automatically retrieved by the WEDM machine, for instance from an RFID chip stuck on the wire spool, or are transcribed manually.

By the measurement it is possible to collect reference value reflecting the impedance of a deployed wire electrode, for instance of a wire electrode having unknown electrical impedance.

Typically, the electrical impedance of an exhausted wire electrode is determined by measurement in dedicated experiments and stored in the database. Alternatively, the electrical impedance of an exhausted wire electrode can be determined by measurements in the course of WEDM machining, to collect corresponding reference values. For instance, with a known and well established WEDM process, which was optimized by the skilled operator or by a process optimization algorithm, and which is safe in terms of wire rupture, the electrical impedance is measured to get a reference value for a permitted wire wearing.

The electrical impedance of an exhausted wire electrode can also be determined roughly, in a simplified way, by multiplying the previously determined or known electrical impedance of an unused wire electrode by a factor, for instance 70%.

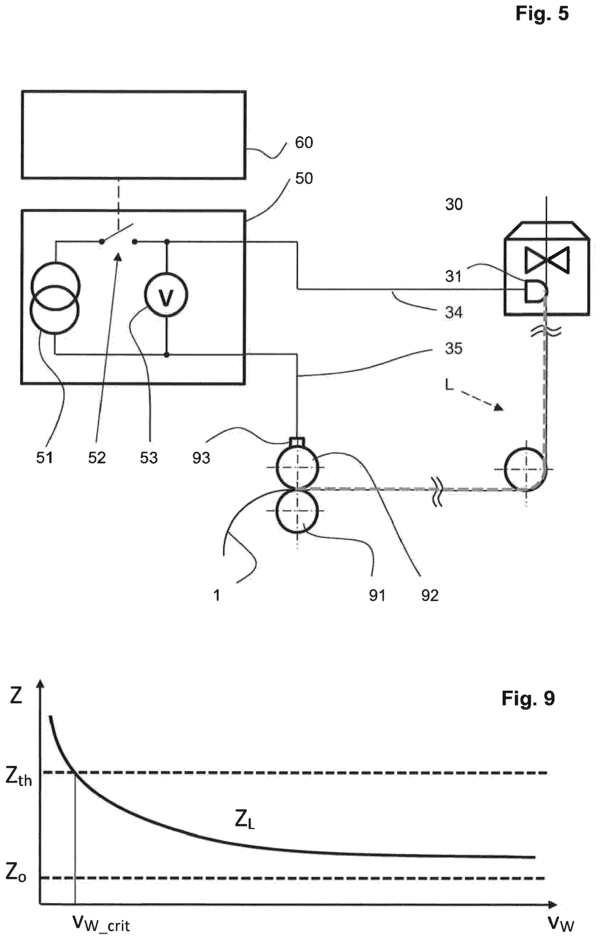

In a typical embodiment, the measurement of the electrical impedance is an electrical resistance measurement, as shown in figure 5. For instance, the electrical resistance of the wire segment L (L') is measured by applying a DC current pulse between the first- and the second electrical contact and by measuring the resulting voltage between the contacts, which according to Ohm's law depends only from the applied current and the resistance of wire segment L. If the deployed wire electrode type is unknown, the DC current pulse may be initially set to a low value and progressively raised. In this way a wire type and/or diameter is identified, using additional information available to the control unit, where required.

According to an embodiment of the invention, the condition of the wire electrode deployed in a current machining is determined by comparing the measured value reflecting the electrical impedance either with the reference value reflecting the electrical impedance of an unused wire electrode of same type, or, with the pre-stored reference value reflecting the electrical impedance of an exhausted wire electrode of same type.

For instance, the condition of the unused wire electrode deployed in a current machining is determined by measuring the electrical impedance of the unused wire drawn from the wire spool, while the wire travels through the wire circuit, with no discharges. The condition of a fresh unused wire electrode may be tested for instance immediately at the installation of a new wire spool, or at the beginning of a machining operation, when the wire traveling circuit is on, but before approaching wire and workpiece.

In the same way, the condition of the used wire electrode deployed in a current machining is determined by measuring the electrical impedance of the used wire, while the wire travels through in the wire circuit, while machining.

The measured value of a used or unused wire electrode is compared with pre-stored values, to derive a wire electrode condition, as detailed further down.

According to an embodiment, the measurement of value reflecting the electrical impedance is conducted in-process, whereat a wearing condition of the deployed wire electrode is determined by comparing the measured value reflecting the electrical impedance of the currently deployed wire electrode with a pre-stored reference value reflecting the electrical impedance of a wire electrode of same type.

The term in-process means, in the course of the WEDM process, while machining, e.g. in a pause between machining pulses. In this way, the true wearing condition of the deployed wire electrode is determined for a wire segment L between the first electrical contact and the second electrical contact, after the workpiece processing section.

Preferably, the WEDM process is neither interrupted nor stopped for the measurement of the electrical impedance $Z_L$ of the used wire.

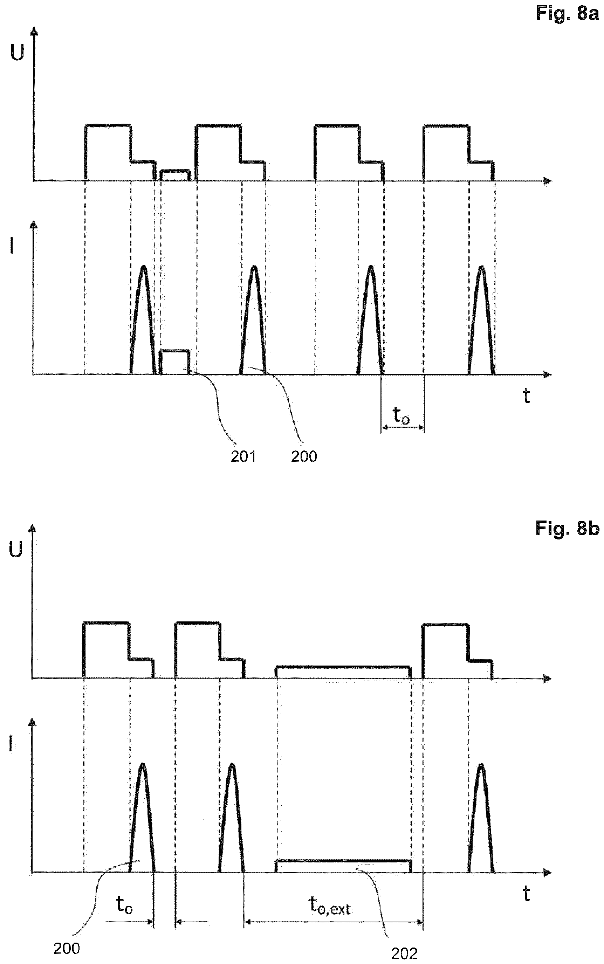

According to an embodiment, the value reflecting the electrical impedance $Z_L$ of the wire electrode is measured by means of a measuring pulse 201, in a pulse pause time $t_o$ between two machining pulses or by means of a measuring pulse 202, in the course of an extended pause time $t_{o,ext}$ (see Figures 8a and 8b). The pulse pause time $t_o$ defines the time of a pause between two consecutive discharge pulses as shown in Fig. 8a. This pulse pause time is part of the regular WEDM machining process, to deionize the gap for the next discharge.

However, the normal pulse pause time $t_o$ between two consecutive discharge current pulses 200 is very short, so that it is very difficult to measure the wire impedance here. Alternatively, an extended pulse pause time $t_{o,ext}$ is introduced, to execute the measurement of the electrical impedance $Z_L$ of the used wire electrode, as shown in Fig. 8b. This extended pulse pause time is typically longer than a pulse pause time $t_o$; the measurement of the electrical impedance $Z_L$ is not seriously affected by the extended pulse pause time $t_{o,ext}$.

The impedance can be measured as often as needed. For example, with a wire traveling speed vw of 300mm/s and a measuring segment length L of 1200mm, the wire travels through the entire measuring route of the WEDM in 4 seconds. In such a case, under stable machining conditions the electrical impedance may be measured e.g. every 1 second. However, with constant workpiece thickness and stable machining conditions, the measurement frequency may be reduced massively. For instance, it is measured in case of variable machining conditions. In a limit case it is executed only in the initial phase of an actual machining. On the other hand, the electrical impedance may be measured more frequently, for instance every 10 milliseconds.

In addition, the measurement of the electrical impedance may be triggered by other process signals. For example, a known workpiece thickness detection method may be used to trigger the measurement of the electrical impedance of the wire segment L, or, the distribution of the discharges may be monitored using e.g. a discharge position sensor (as shown e.g. in EP3446820) to recognize the actual engagement line between the wire and the workpiece or a localization tendency, and to activate the measurement of the electrical impedance as a function of a the actual engagement line.

According to a further embodiment, the measurement of the value reflecting the electrical impedance of the currently deployed unused wire electrode is conducted while no machining is performed or in a process pause, whereas a currently deployed wire electrode type and/or a wire electrode diameter is determined by comparing the measured value reflecting the electrical impedance of the wire electrode with pre-stored reference value reflecting the wire electrode electrical impedances.

In such embodiment, the same system used to determine the wearing condition of the wire electrode deployed in the machining process can be used to determine the condition of the fresh wire electrode. Here the determined condition of the wire electrode is not the wire wearing condition, since the measurement is conducted with an unused wire electrode. For instance, the measurement of the electrical impedance of the unused wire serves to verify if the value for the deployed wire correspond to the expected value. The measured electrical impedance may deviate, for example, because the wire type or diameter is wrong, or the quality of the wire electrode is not as expected, or the first- and/or the second electrical contact laying in a wire evacuation section of the wire traveling circuit is not working properly, or the measuring circuit is defective, etc.

If the measured value deviates substantially from an expected value, the user may get a warning message, the machining may be paused, and the wire electrode spool may be replaced. The user may get further information and support to determine the reason for such deviation.

This measurement may be carried out at the beginning of a machining, once the wire is inserted in the wire traveling circuit, while the wire travels or while it is resting.

According to a preferred embodiment of the invention, a wire traveling speed is controlled as a function of the current wearing condition of the wire electrode. The wire traveling speed is adjusted in consideration of the current wire wearing, which is determined by means of the measurement of the electrical impedance of the wire electrode, in-process. In this way, the utilization of the wire electrode is improved, which means that the consumption of wire electrode is reduced. In addition to the reduced operating cost this contributes to a better exploitation of resources.

Figure 9 is a graph illustrating the relation of electrical impedance $Z_L$ and wire traveling speed vw. An initial impedance of the fresh unused wire is indicated as $Z_o$. An impedance threshold $z_{th}$ is also indicated. The wire traveling speed $v_w$ is controlled e.g. in consideration of the electrical impedance $Z_L$ and threshold $z_{th}$. For example, the wire traveling speed vw is reduced to slightly above the critical wire traveling speed $v_{w\_crit}$, in which case the condition of the wire electrode may be monitored frequently. Or, the adjustment of the wire traveling speed may held rather conservative, whereby the speed is higher than actually needed, means with comparably large safety against wire breaking.

Typically, an initial wire traveling speed is set at the beginning of a machining. The initial wire traveling speed is retrieved from a machining parameters database, together with other machining parameters, on the base of the current workpiece material, height, machining objective, etc.. For example, the wearing condition of the wire electrode is monitored from the beginning.

Although the wire wearing detection according to the invention is not a true real-time detection, the delay in the detection of the wire condition is not relevant for the main purposes of the invention. In fact, the wire traveling speed is smoothly adjusted, avoiding unsteady wire tension. Thus, the wire electrode saving effect is still given.

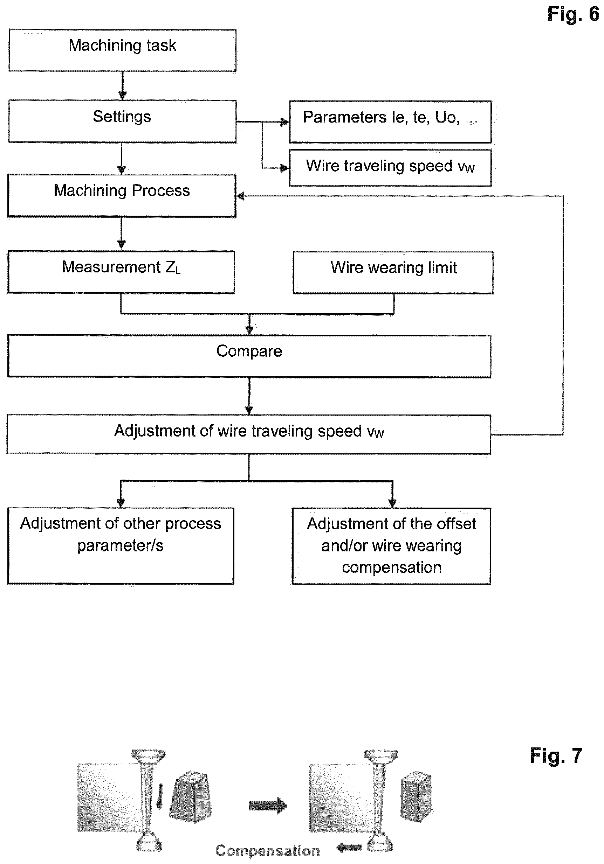

Figure 6 is a flowchart illustrating the inventive WEDM process, in which the wire traveling speed is adapted in-process based on the determined wire wearing by measurement of the electrical impedance of the deployed wire electrode. The machining process is carried out with selected machining parameter settings, the settings including suitable current I, pulse on time $t_e$ (discharge pulse duration), open voltage $U_o$, and a wire

traveling speed $v_w$. The actual wire wearing is compared with the wire wearing limit and wire traveling speed is adjusted based on the comparison. Simultaneously or optionally, one or more other parameters and the machining offset and the wire wearing compensation are adjusted, as discussed here below.

According to another embodiment, a wire shape deviation is compensated as a function of the measured wire wearing condition of the wire electrode by tilting the wire electrode against the workpiece and/or offsetting of the wire electrode. The wire shape deviation is compensated in consideration of the current wire wearing, which narrows the wire electrode cross section along the engagement line of wire and workpiece. The current wire wearing is determined by means of the measurement of the electrical impedance of the wire electrode, in-process.

Wire wearing compensation (compensation of the wire shape deviation due to wear) is known for instance from DE9218090U. To compensate that shape deviation, the wire electrode is slightly inclined laterally, against the workpiece. This compensation is achieved by displacement of the upper- and lower wire guide, orthogonally with respect to the cutting direction. The measurement of the electrical impedance of a used wire segment L provides an accurate information about the **wire wearing. The actual cross-section of the used wire, the residual wire diameter** or **other equivalent information concerning the geometry of the used wire is derived on the base of the currently measured electrical impedance. Then, knowing the diameter of the fresh wire and the diameter of the used wire, the wire electrode is tilted and/or offset to avoid the geometric error due to wire wear to occur on the cut part.**

**According to a further embodiment, the average discharge current is controlled as a function of the measured wire wearing condition of the wire electrode.**
**The average discharge current is controlled e.g. by adjusting the discharge frequency, or the current amplitude, or the pulse shape, or a combination thereof.**

**In an embodiment, the process is initially conducted as illustrated above, where the wire traveling speed is controlled as a function of the current wearing condition of the wire electrode. In said initial phase, an optimal wire traveling speed is determined.** Then, **the wire traveling speed is maintained at the same level, while the average discharge current is adjusted as a function of the measured wire wearing condition of the wire electrode.**

**In another embodiment, the wire traveling speed is set on the base of the machining parameters database to fit for the current machining operation, or is determined in experiments. The process is conducted by adjusting the average discharge current as a function of the measured wire wearing condition of the wire electrode. In this way the machining speed**

is increased without risk of wire breaking.

**According to another embodiment, the fresh wire electrical impedance is measured between two points in any region of the wire traveling circuit, before entering** the **workpiece processing area. More specifically, the wire electrode is in contact with a third- and a fourth electrical contact, both being located on the wire traveling circuit, ahead of the** workpiece processing section in wire traveling direction, and an value reflecting the electrical impedance $Z_{L'}$ of a fresh wire electrode segment L' between the third- and the fourth electrical contact is measured, and the condition of the unused wire electrode is derived from the measured value reflecting the electrical impedance $Z_{L'}$ of said wire electrode segment L'. In particular, an electrical impedance $Z_{L'}$ of a fresh wire electrode segment L' between the third- and the fourth electrical contact is measured, and the condition of the unused wire electrode is derived from the measured electrical impedance $Z_{L'}$ of said wire electrode segment L'

According to an embodiment, the electrical impedance of an unused wire electrode is measured in the wire supplying section, between a guide pulley of the supply-side wire traveling circuit and the upper current feeder, of the upper wire guiding head.

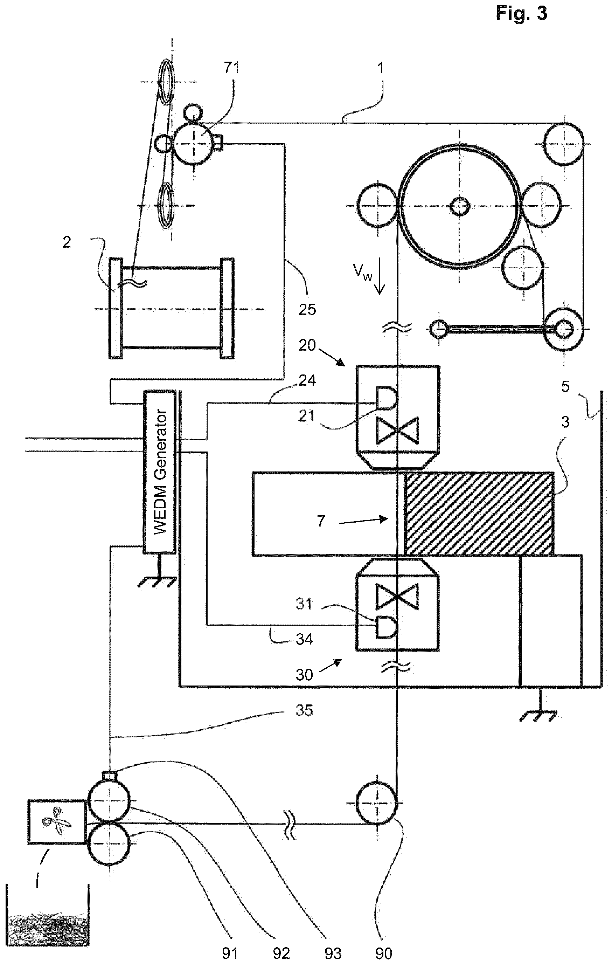

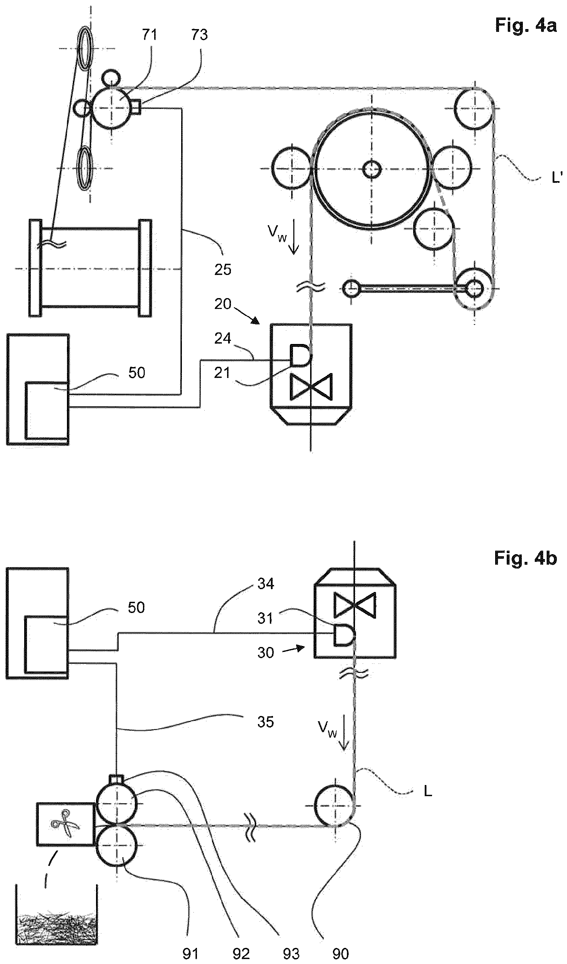

Figure 3 which is similar to figure 1, additionally shows the lead 25 which is connected to a guide pulley 71 of the supply section of the wire traveling circuit. The measuring loop for the measurement of the electrical impedance $Z_{L'}$ of a segment L' of an unused wire electrode in the wire supplying section is thus formed by a third electrical contact, e.g. an electrically conductive guide pulley 71, a fourth electrical contact, e.g. the upper current feeding member 21, the respective leads 24 and 25, and the segment L' of fresh wire electrode to be measured. The leads 24 and 25 are connected to the electrical impedance measuring circuit 50, as shown in Fig. 4a. For instance, the lead 25 is connected to the guide pulley 71 by means of a brush 73. The lead 24 connects the upper current feeder 21 to the electrical impedance measuring circuit 50. Lead 24, 34 is e.g. a generator cable, a reference cable for the measurement of process signals, or a dedicated cable for the impedance measurement.

Most wire electrical discharge machines comprise a wire preparation unit (not shown), by which the wire is prepared for threading. The wire is heated and stretched, to form a straight wire portion with a pointed tip to facilitate the threading.

According to an embodiment, the electrical impedance of an unused wire electrode is measured in the wire supplying section, in a wire preparation unit. Here the electrical impedance is measured between the contacts of the wire preparation unit. Preferably the impedance is measured at the tensioned wire, after the wire threading operation.

With the additional provision of a third- and a fourth electrical contact in the wire supplying section, being connected to the electrical impedance measuring circuit 50, the condition of the unused wire electrode can be determined at any time, also while machining.

According to an embodiment, the electrical impedance of an unused wire electrode is measured in the wire supply section, and the electrical impedance of a used wire electrode is measured in the wire evacuation section, simultaneously.

For instance, the impedance values of the used and unused wire are determined at the same time, and these values are compared to determine the wire wearing condition.

According to an embodiment, at least one of the first- and the second electrical contact is a sliding electrical contact or a rolling electrical contact.

According to another embodiment, the first electrical contact is a lower current feeder 31 for feeding a machining current, and the second electrical contact is one of: a wire guiding roller of the wire traveling circuit 90, a wire presence sensing contact for the detection of the presence of the wire electrode at a certain point of the wire traveling circuit (not shown), an auxiliary electrical contact (not shown), or a roller of a pinch roller pair 91, 92.

**Both, the first- and the second electrical contact are thus located after the workpiece in wire traveling direction, so that the electrical impedance of the wire electrode segment L between the first electrical contact and the second electrical contact is measured on a used wire segment. Preferably, the first contact is the lower current feeder 31 for feeding a machining current (for the cutting process) in the lower wire guiding head 30. Preferably, the second contact is a roller of a pinch roller pair 91, 92.**

**The current feeders 21, 31, wire guiding rollers (e.g. guide roller 71), and pinch roller pair 91, 92 are common parts of today's WEDM. By using the lower current feeder 31 and pinch roller pair 91, 92 as contact points to measure the impedance in the wire evacuation section there is a further advantage, that the wire traveling circuit is not perturbed by additional frictional resistances and potential causes of oscillation. Reliability and maintenance cost of the machine is not affected by additional wearing parts in the wire traveling circuit. Existing parts of the wire traveling circuit are thus advantageously used as contact points, to measure the electrical impedance of the wire. To operate as a contact point, at least one of the pinch rollers 91, 92 comprises an electrical contact, for example a carbon brush 93 (as shown in figure 3 and 4b) . For example, said brush may be mounted on the shaft of one of the pinch rollers.**

**The first- and the second contact are connected to the electrical impedance measuring circuit 50.**

**The electrical impedance of wire electrode segment L is proportional to its length. By using the lower current feeder 31 of the lower wire guiding head 30**

**as a first contact, and the pinch roller pair 91, 92 as a second contact, the distance between the electrical contacts is pretty long, so that the electrical impedance can be measured accurately. Preferably, the distance between the first- and the second electrical contact is constant.**

The electrical impedance of wire electrode segment L is measured continuously, periodically, or only as needed. As needed means, for instance, at the beginning of a machining, in the course of the initial cut, in case of variation of the cutting geometry and/or cutting height. A variation of the cutting height is identified in known manner, for example by detecting the position of the sparks along the engagement line of the wire and workpiece, by monitoring the cutting speed and the discharge frequency, or using CAD/CAM data of the current machining, since the geometry of the workpiece is included in the CAD/CAM data, or by a combination of these methods. Based on this measurement a machining parameter, e.g. the wire traveling speed, may be adjusted in-process.

Now, the operation for determining a condition of a wire electrode deployed in a wire cutting machine according the invention is illustrated by means of an example:

A workpiece 3 is mounted and aligned on the table of the WEDM. A new wire spool 2 with a brass electrode having diameter 0.2mm is loaded on the spool-carrying shaft of the WEDM (represented by the dash-dotted line), and the wire is inserted in the wire traveling circuit. The preparation includes the specification of the wire electrode type and diameter. The initial wire traveling speed to be used in the WEDM process is preset by the selection of the appropriate machining technology set. Once the setup is completed, the machining program is started. The wire is threaded and transported under tension through the wire traveling circuit. At the beginning, the wire is at a distance from the part in X/Y direction, for instance 2mm. The unused wire is drawn through the wire traveling circuit, in contact with the first electrical contact (the lower current feeder 31 of the lower wire guiding head 30) and the second contact (pinch roller pair 91, 92).

The electrical impedance of the unused wire segment L' traveling on these two contacts is measured by the electrical impedance measuring circuit 50. The measured electrical impedance is compared with the electrical impedance of the same wire type and diameter, which was previously stored in the database. If this comparison shows an abnormal deviation, the process is paused and a message is displayed to inform the user. The main cut starts with wire and workpiece moving relatively to each other, according to the machining program. While machining, for instance in the course of the entry cut, the electrical impedance of the used wire segment L is measured. The measurement is repeated a plurality of times in the discharge pulse pause periods $t_o$ or in the extended pulse pause times $t_{o,ext}$. Measurement values are averaged after excluding outliers. The wire wearing is determined by comparing the electrical impedance measured in-process with the electrical impedance value of the unused wire, according to the wire database. A wearing ratio is computed by dividing the measured electrical impedance value by the pre-stored value.

The wire traveling speed is reduced smoothly targeting a predefined wearing ratio of e.g. 0.75, which is at a safe distance from the predefined wearing limit of e.g. 0.70. The electrical impedance is measured also in the course of adjustment of the wire traveling speed, or thereafter. The wire tension is also measured and controlled, in real-time.

Figure 5 shows a measuring loop in the wire evacuation section, and an exemplary measuring circuit for the measurement of the electrical impedance (e.g. resistance) of a currently monitored wire electrode segment L. A DC current signal $I_M$ is provided by the current source 51, and is applied at the measuring loop which comprises the leads 34 and 35, the contact 31 (lower current feeder), the contact 91, 92 (pinch roller pair), and the wire segment L to be measured. A switch 52 is provided to open the measuring circuit. For instance, the switch is controlled by a control unit 60. The switch is synced with the operation of the pulse generator. The switch controlling the measurement circuit is closed in the course of pauses $t_o$, $t_{o,ext}$, namely when the generator is turned off. When the switch 52 is closed the measuring current provided by the current source flows through the measuring circuit, and a voltage $U_M$ is measured by voltage measurement unit 53. The resistance $R_L$ of the wire segment L is computed according to ohm's law:

$$R_L = U_M / I_M$$

The measured voltage $U_M$ may be corrected, e.g. in consideration of a previous measurement made with a fresh wire at the beginning of the machining operation.

With the method according the invention the electrical impedance of the considered wire segment L is measured; it is not possible to detect an uneven distribution of craters. However, to a certain extent it is possible to detect a sudden variation of the wire cross-section if the electrical impedance is measured frequently, for instance by monitoring a derivative of the measured impedance.

In addition, the method may be enhanced by combining the result of said electrical impedance measurement with a second measurement of the electrical impedance or with other sensor signals, in order to rate the plausibility of the measurement.

It is understood that the method according to the invention can be combined with other sensing methods, e.g. to improve the trustiness. For instance, other sensors can be used to determine the size of the fresh wire, e.g. the optical sensors used in the prior art. Additional characteristics of the wire electrode can be sensed and combined with the information provided by the invention, e.g. a wire temperature of a used wire. In addition, the method may be combined with wire wearing and/or a wire temperature derived from a model, e.g. a model based on the discharge pulse energy and discharge pulse frequency.

Moreover, since the impedance of the wire electrode is proportional to its temperature, a determined residual wire diameter depends on the temperature of the measured wire portion having length L. The relevant wire electrodes materials have positive temperature coefficients of resistance, so that the impedance increases with higher temperature. Higher temperature thus implies increased resistance, which is interpreted as a deterioration of the wire electrode, e.g. a reduced wire diameter. A further improved method for determining a condition of a wire electrode may thus include the correction of the impedance measurement in consideration of the temperature of the measured wire portion having length L. This temperature may be a measured temperature, a derived temperature based on the current load of the WEDM process, an empirical value, or a combination of these values. In this way the wire electrode may be used even more efficiently.

With certain adaptations the invention can also be used for determining the condition of a wire electrode used in a so called fastwire electrical discharge machine. These machines use a molybdenum wire which moves back and forth at high speed, and the machining process uses an electrolyte as a machining fluid. In the case of the fastwire machines the advantage is that one can determine the wearing state of the reciprocating molybdenum wire, e.g. to determine the end of life of the wire electrode, before wire breaking.

Reference List

| 1 | wire electrode |
| 2 | wire spool |
| 3 | workpiece |
| 5 | work tank |
| 6 | table |
| 7 | workpiece processing section |

| 10 | WEDM generator |
| 20 | upper- and lower wire guiding head |
| 21,31 | upper- and lower current feeder |
| 22,32 | upper- and lower wire guide |
| 24,34 | generator cables |
| 32,35 | leads |

| 50 | impedance measuring circuit |
| 51 | current source |
| 52 | switch |
| 53 | voltage measurement |
| 60 | control circuit |

| 70 | brake roller |
| 71 | guide pulley |
| 73, 93 | electrical contact, brush |

| 90 | deflection roller |
| 91, 92 | pinch roller pair |

| 100 | wire chopping circuit |
| 101 | collecting box |

| 200 | Discharge current pulse |
| 201, 202 | Measuring pulse |

## Claims

1. Method for determining a condition of a wire electrode (1) deployed in a wire electrical discharge cutting machine (WEDM), the machine comprising a wire traveling circuit with a first- and a second wire guiding head (20, 30) by which the wire electrode is guided and positioned in relation to a workpiece (3) laying between these wire guiding heads, **characterized in that**
the wire electrode is in contact with a first- and a second electrical contact, both being located on the wire traveling circuit, after the workpiece processing section in wire traveling direction, and that a value reflecting an electrical impedance of the wire electrode segment L between the first electrical contact and the second electrical contact is measured, and that the condition of the wire electrode is derived from the measured value reflecting the electrical impedance .

2. The method according to claim 1, wherein the value reflecting the electrical impedance $Z_L$ is determined by

   - applying a defined DC current signal to the considered wire electrode segment L between the first and the second electrical contact, and by measuring the voltage between the first and the second electrical contact; and/or
   - applying a defined DC voltage signal to the considered wire electrode segment L between the first and the second electrical contact, and by measuring the current between the first and the second electrical contact.

3. The method according to claim 1 or 2, **characterized in that** a reference value reflecting the electrical impedance of an unused wire electrode and/or an exhausted wire electrode is pre-stored in a database, for one or more wire electrode types and/or wire electrode diameters.

4. The method according to one of claims 1 to 3, **char-**

**acterized in that** the reference value reflecting the electrical impedance of an unused wire and/or the electrical impedance of an exhausted wire electrode is measured and stored in the database.

5. The method according to one of the preceding claims, **characterized in that** the condition of the wire electrode deployed in a current machining is determined by comparing the measured value reflecting the electrical impedance $Z_L$ with the reference value reflecting the electrical impedance

   - of an unused wire electrode of same type, or
   - of an exhausted wire electrode of same type.

6. The method according to one of the preceding claims, **characterized in that** the measurement of the value reflecting the electrical impedance of the currently deployed wire electrode is conducted in-process, whereat a wearing condition of the deployed wire electrode is determined by comparing the measured value reflecting the electrical impedance of the currently deployed wire electrode with a pre-stored reference value reflecting the electrical impedance of a wire electrode of same type.

7. The method according to one of preceding claims, **characterized in that** the value reflecting the electrical impedance $Z_L$ of the wire electrode is measured in a pulse pause time $t_o$ between two machining pulses or in an extended pulse pause time $t_{o,ext}$.

8. The method according to one of the preceding claims, **characterized in that** the measurement of the value reflecting the electrical impedance of the currently deployed unused wire electrode is conducted while no machining is performed or in a process pause, whereas a currently deployed wire electrode type and/or a wire electrode diameter is determined by comparing the measured value reflecting the electrical impedance of the wire electrode with pre-stored reference value reflecting the wire electrode electrical impedances.

9. The method according to one of the preceding claims, **characterized in that** a wire traveling speed is controlled as a function of the measured wire wearing condition of the wire electrode.

10. The method according to one of the preceding claims, **characterized in that** a wire shape deviation due to wear is compensated as a function of the current wearing condition of the wire electrode by tilting the wire electrode against the workpiece and/or offsetting of the wire electrode.

11. The method according to one of the preceding claims, **characterized in that** the average discharge current is controlled as a function of the measured wire wearing condition of the wire electrode.

12. The method according to one of the preceding claims, **characterized in that** the wire electrode is in contact with a third- and a fourth electrical contact, both being located on the wire traveling circuit, ahead of the workpiece processing section in wire traveling direction, and that an value reflecting an electrical impedance $Z_L$' of a wire electrode segment L' between the third electrical contact and the fourth electrical contact is measured, and that the condition of the unused wire electrode is derived from the measured value reflecting the electrical impedance $Z_L$' of said wire electrode segment L'.

13. The method according to one of the preceding claims, **characterized in that** at least one of the first- and the second electrical contact is a sliding electrical contact or a rolling electrical contact.

14. The method according to one of the preceding claims, **characterized in that** the first electrical contact is a lower current feeder (31) for feeding a machining current, and the second electrical contact is one of:

> - a wire guiding roller of the wire traveling circuit,
> - a wire presence sensing contact for the detection of the presence of the wire electrode at a certain point of the wire traveling circuit,
> - an auxiliary electrical contact,
> - a roller of a pinch roller pair.

15. Wire electrical discharge machine implementing the method of one of the claims 1 to 14.

## Fig. 1

Fig. 2d

Fig. 2c

Fig. 2a

Fig. 2b

**Fig. 3**

Fig. 4a

Fig. 4b

**Fig. 5**

**Fig. 9**

**Fig. 6**

```
┌─────────────────────────┐
│     Machining task      │
└─────────────────────────┘
             │
             ▼
┌─────────────────────────┐        ┌────────────────────────────┐
│        Settings         │───────▶│  Parameters Ie, te, Uo, ... │
└─────────────────────────┘        └────────────────────────────┘
             │                     ┌────────────────────────────┐
             │              ──────▶│  Wire traveling speed vw    │
             ▼                     └────────────────────────────┘
┌─────────────────────────┐◀──────────────────────────────┐
│    Machining Process    │                                │
└─────────────────────────┘                                │
             │                                              │
             ▼                                              │
┌─────────────────────────┐     ┌────────────────────────┐ │
│     Measurement ZL      │     │    Wire wearing limit   │ │
└─────────────────────────┘     └────────────────────────┘ │
             │                            │                 │
             └──────────┬─────────────────┘                 │
                        ▼                                    │
┌──────────────────────────────────────────────────┐       │
│                    Compare                         │       │
└──────────────────────────────────────────────────┘       │
                        │                                    │
                        ▼                                    │
┌──────────────────────────────────────────────────┐───────┘
│     Adjustment of wire traveling speed vw          │
└──────────────────────────────────────────────────┘
             │                            │
             ▼                            ▼
┌──────────────────────┐    ┌──────────────────────────┐
│ Adjustment of other  │    │  Adjustment of the offset │
│   process            │    │   and/or wire wearing     │
│   parameter/s        │    │     compensation          │
└──────────────────────┘    └──────────────────────────┘
```

**Fig. 7**

Compensation

17

Fig. 8a

Fig. 8b

Europäisches
Patentamt

European
Patent Office

Office européen
des brevets

# EUROPEAN SEARCH REPORT

**Application Number**

EP 22 21 6272

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP S60 131122 A (INOUE JAPAX RES) 12 July 1985 (1985-07-12) | 15 | INV. B23H7/02 |
| A | * figures * | 1-14 | B23H7/20 |
| A,D | JP S61 209819 A (SODICK CO LTD) 18 September 1986 (1986-09-18) * abstract * | 1 | |
| A | JP S59 102529 A (INOUE JAPAX RES) 13 June 1984 (1984-06-13) * abstract * | 1 | |
| A | JP S59 219119 A (INOUE JAPAX RES) 10 December 1984 (1984-12-10) * abstract; figures 1,2 * | 1 | |

**TECHNICAL FIELDS SEARCHED (IPC)**

B23H

The present search report has been drawn up for all claims

| Place of search | Date of completion of the search | Examiner |
|---|---|---|
| The Hague | 16 June 2023 | Jaeger, Hein |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 6272

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2023

| Patent document cited in search report | | Publication date | Patent family member(s) | | Publication date |
|---|---|---|---|---|---|
| JP  S60131122 | A | 12-07-1985 | JP | H0313013 B2 | 21-02-1991 |
| | | | JP | S60131122 A | 12-07-1985 |
| JP  S61209819 | A | 18-09-1986 | NONE | | |
| JP  S59102529 | A | 13-06-1984 | NONE | | |
| JP  S59219119 | A | 10-12-1984 | JP | H0657372 B2 | 03-08-1994 |
| | | | JP | S59219119 A | 10-12-1984 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10277843 A
- JP S61209819 A
- EP 3834977 A1

- EP 3446820 A
- DE 9218090 U